(19) Europäisches Patentamt
European Patent Office
Office européen des brevets

(11) **EP 3 132 099 B1**

(12) **EUROPEAN PATENT SPECIFICATION**

(45) Date of publication and mention
of the grant of the patent:
**26.12.2018 Bulletin 2018/52**

(51) Int Cl.:
***E04B 1/94*** *(2006.01)*

(21) Application number: **15719111.5**

(22) Date of filing: **16.04.2015**

(86) International application number:
**PCT/US2015/026087**

(87) International publication number:
**WO 2015/161024 (22.10.2015 Gazette 2015/42)**

(54) **PANEL WITH FIRE BARRIER**

PLATTE MIT BRANDSCHUTZBARRIERE

PANNEAU AVEC BARRIÈRE ANTI-INCENDIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.04.2014 IT MI20140730**

(43) Date of publication of application:
**22.02.2017 Bulletin 2017/08**

(73) Proprietor: **Dow Global Technologies Llc
Midland, MI 48674 (US)**

(72) Inventors:
 • **BERTUCELLI, Luigi
   I-42100 Reggio Nell' Emilia (IT)**
 • **GUANDALINI, Maurizio
   I-54033 Carrara (IT)**
 • **LOTTI, Luca
   I-42124 Reggio Emilia (IT)**
 • **VAIRO, Giuseppe
   I-42015 Correggio (IT)**

(74) Representative: **Beck Greener
   Fulwood House
   12 Fulwood Place
   London WC1V 6HR (GB)**

(56) References cited:
**EP-A- 0 044 129     EP-A1- 2 581 216
WO-A2-2014/020439     US-A- 4 459 334**

**Description**

<u>Field</u>

Embodiments relate to panels and panel arrangements including a non-steel based facing and a fire barrier layer, to constructions including such panels, and to methods of forming the panels and panel arrangements.

<u>Introduction</u>

Insulating products that include polymer foams provide good thermal insulation and may be used in various applications including building components. For example, the insulating products may be effectively used to meet new Energy Saving regulations. Concurrently, tightened building codes may require the use of building products having improved fire behavior characteristics. Further, energy efficient buildings might pose some additional challenges for passive fire protection, e.g., based on the highly insulated building envelope and/or presence of solar elements. Accordingly, there is a need for innovative engineered building products able to combine the excellent thermal insulation of polymer foams with an improved behavior in the event of a fire.

EP 2 581 216 A1 discloses an insulation panel, comprising a first facing that is a metal plate, an insulating foam layer, and a fire barrier layer adjacent to the first facing and between the first facing and the insulating foam layer, the fire barrier layer including a dispersion of expandable graphite in a polyisocyanate polymer matrix.

<u>Summary</u>

Embodiments may be realized by providing an insulation panel including a first non-steel based facing that is a combustible material, a glass-fleece based material, or a low melting point thin metal foil, an insulating foam layer, and a fire barrier layer adjacent to the first non-steel based facing and between the first non-steel based facing and the insulating foam layer. The fire barrier layer includes a dispersion of expandable graphite in a polyisocyanate polymer matrix and the amount of expandable graphite per unit area is 200-1250g/m$^2$. By combustible material it is meant that the material would be substantially fully consumed during a fire event (e.g., the combustible material is a polymer membrane based material or a wood-based material). By low melting temperature thin metal foil it is meant that the metal foil has a melting temperature below at least 800 °C. The thickness is 0.05-0.1mm.

<u>Brief Description of the Drawings</u>

FIG. 1 illustrates a perspective view of a panel 10 according to an exemplary embodiment. The layers, which may not all be present, are illustrated in the following order: non-steel based facing A1, fire barrier layer B, further optional fire barrier layer C, insulating foam D, and another facing A2.

FIG. 2 illustrates a graph of experimental results.

<u>Detailed Description</u>

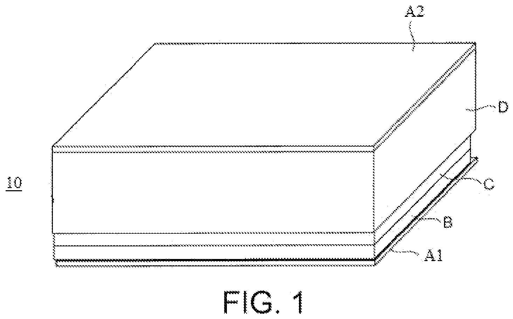

According to embodiments, insulation panels may include a rigid polyurethane/polyisocyanurate (PUR/PIR) foam core and a fire barrier layer adjacent to a non-steel based facing (e.g., the fire barrier layer may be bonded with the use of a separate adhesive layer to the non-steel based facing and/or may be directly bonded to the non-steel based facing). For example, the insulation panel may be arranged as shown in FIG. 1. While the insulation panel includes a non-steel based facing, the panel may still demonstrate desirable fire behavior so as to be useable in various application (e.g., in applications where it may not be feasible or desirable to use a self-supporting insulation panel with steel facings). For example, the non-steel based facing may be consumed and/or melt during a fire event, but the presence of the fire barrier layer enhances the behavior of the insulation panel during the fire event. The non-steel based facings for the insulation panel may be selected from exemplary non-steel based facings that include aluminum (such as aluminum foil), a composite multi-layer non-steel based foil, stressed skins of non-steel metal foil, glass based material such as a glass-fleece based material, polymer membrane based material, and wood-based material. The insulation panel having both the non-steel based facing and the fire barrier layer may show enhanced properties with respect to fire growth rate index (FIGRA), smoke growth rate index (SMOGRA), total heat release (THR), lateral flame spread (LFS), total smoke production (TSP), and/or the occurrence of burning droplets or particles when referred to the test methods described with respect to the standard of EN 13501-1. For example, during a fire event, a swollen fire barrier layer (e.g., that has expanded to several times its original thickness) will protect the insulation foam from flame impingement and may even fill and seal an air-gap cavity, reducing and/or preventing a fast flame propagation otherwise likely to happen due to the chimney effect.

The fire barrier layer includes a dispersion of expandable graphite in a polyisocyanate polymer matrix and the amount of expandable graphite per unit area is at least 200-1250 g/m$^2$. By combustible material it is meant that the material would be substantially fully consumed during a fire event (e.g., such that the material ignites and readily burns when exposed to a flame, the material exhibits a weight loss of greater than 50 wt% (e.g., greater than 80 wt%, greater than 90 wt%, greater than 99 wt%, etc.) during the fire event, and/or during the first 30 seconds of the fire event the material exhibits flaming). For example, the combustible material may fail EN ISO 1182 (a non-combustibility test for identifying products that will not, or significantly not, contribute to a fire) and/or show grow calorific potential according to EN ISO 1716 (a gross calorific potential test that determines the potential maximum total heat release of a product when burned completely, GCP is measured in in MJ/kg or MJ/m$^2$).

By glass-fleece based material it is meant by way of example a glass-fleece substrate that is known in the art (e.g., as used in building products). The glass-fleece based material may have a weight per square meter that is between 85 and 400 g/m$^2$. The glass-fleece based material may be a layer that includes glass-fleece and has a thickness less than 2.0 mm. Other exemplary glass-fleece based materials include mineral-coated glass fleece and bitumen impregnated glass fleece (e.g., mineral-coated glass fleece and bitumen impregnated glass fleece that is known in the art).

By low melting temperature thin metal foil it is meant that the metal foil has a melting temperature below at least 800 °C. The thickness is 0.0.5-0.1mm. The fire barrier layer may provide protection to the insulating foam layer from the side of a facing that could either burn or melt away when exposed to the fire event. For example, when exposed to the heat of a fire during the fire event, the fire barrier layer may undergo a physical/chemical modification leading to the formation of a highly expanded porous carbonaceous char that may protect the foam core thereunder from flame impingement.

For example, the insulation panel having the non-steel based facing and the fire barrier layer may meet the requirements necessary for a classification of Euroclass Bs1d0 according to standard EN 13501-1. The Euroclass system was introduced in Europe by a Commission Decision (2000/147/EC), which is dated February 8, 2000, and implements Council Directive 89/106/EEC (Ref. OJ L 50, 23.2.2000). The Euroclass system includes sub-systems A to F, of which the highest sub-class of A typically includes products that are generally regarded as non-combustible products. Accordingly, the B sub-system is a sought after classification standard for products include polyurethane foams such as insulation panels, since the foam cores are typically regarded as combustible products. The sub-systems (including the B sub-system) are further divided into s1, s2, and s3 based on smoke classification and d0, d1, and d2 based on burning droplets classification. To meet the "B" sub-system requirements the insulation panel has to withstand a corner test (according to the standard EN 13823) in which several parameters are measured. First of all, the total heat release (THR) must be less than or equal to 7.5 MJ, the fire growth rate index threshold 0.2 MJ must be less than or equal to 120 W/s, and the fire spread should not reach the lateral edge of the panel assembly. For the s1 classification, the insulation panel should show a total smoke production (TSP) that is less than or equal to 50 m$^2$ and, at the same time, a smoke growth rate index (SMOGRA) that is less than 30 m$^2$/s$^2$. For the d0 classification, the insulation panel demonstrates an absence of flaming droplets during the test.

The fire barrier layer may include the dispersion of expandable graphite in the polyisocyanate polymer matrix, which includes polyurethanes, polyurethane-polyureas, and/or polyurethane-polyisocyanurates. According to an exemplary embodiment, the matrix includes polyurethane-polyisocyanurates of a high index formulation. For example, the polymer matrix may be formed by the reaction at an isocyanate index of more than 180 (e.g., from 185 to 1500) of an isocyanate-containing reactant and a polyol reactant including a long chain polyol of a number average equivalent weight of more than 200 g/mol (e.g., from 220 to 1800). The polyol reactant may include a higher equivalent weight polyether polyol (e.g., a polyoxypropylene-polyoxyethylene polyether polyol having an equivalent weight from 1000 to 1800) and/or a lower equivalent weight polyester polyol (e.g., an aromatic polyester polyol having an equivalent weight from 220 to 500). According to embodiments, the amount of expandable graphite per unit area of the panel is from 200 g/m$^2$ to 1250 g/m$^2$.

The panel may further include a second facing (e.g., a steel based facing or another non-steel based facing) on the opposite side of the foam layer having the first non-steel based facing. A further fire barrier layer may or may not be present between the second facing and the foam core. This fire barrier layer may or may not be the same as the first fire barrier layer. The panel may exclude a thin layer of non-expanded or slightly expanded polyisocyanate based polymer formed from an isocyanate and a polyol, which is used to promote adhesion between the facing and the foam core. This thin layer may be referred to as the additional polyurethane/polyisocyanurate layer or adhesion promoter layer.

According to exemplary embodiments, the insulation panel may be characterized by excellent thermal insulation (e.g., having a heat transfer coefficient, known as a U-value, that is less than 1.00 W/(m$^2$K), less than 0.50 W/(m$^2$K), and/or less than 0.30 W/(m$^2$K)). The insulation panel may then have an overall thermal conductivity at 10 °C that is less than 0.1 W/(m*K), less than 0.05 W/(m*K), and/or less than 0.03 W/(m*K).

The insulation panel may be substantially flat in a resting state and rigid. The insulation panel may be useful for thermal insulation of ducts, walls, and/or roofs. For example, the insulation panel may be used in component installation applications such as ductwork. The position of the fire barrier layer may depend on the specific application, e.g., the fire barrier layer (and the adjacent skin) may face a cavity or face a substrate. The insulation panels may have a tongue and groove edging on two or the four sides. For ductwork applications, the insulation panel may have folded sheet metal catches or other types of interlocking edge design to allow the panels to push-fit together to form or surround assembled ducts. According to another example, the insulation panel may be firmly fixed to supporting frames that additionally act as spacers for providing the gap of the ventilated cavity or be directly fastened to the outer surface of the wall.

For some end-use applications the insulation panel can be finished with a profile, such as a metal stiffener, a metal joist for supporting tiles, and/or with wooden studs. The insulation panels may be used in different types of constructions, such as masonry, steel, and timber-framed constructions. For example, the insulation panel may be glued and/or fastened to the outer surface of a wall. In another example, the insulation panel may be used covered with render and reinforcing net. In the event that the render cracks and/or loses integrity, the fire barrier layer may provide additional protection to the foam core and/or limit the spreading of fire. The optional presence of a fiber glass reinforcement in the foam core may help reduce or delay the formation of cracks in the foam during exposure to heat or flame.

Fire Barrier Layer

The fire barrier layer is also referred to herein as the intumescent layer, the first fire barrier layer, and the fire barrier layer including expandable graphite. The fire barrier layer having expandable graphite is arranged adjacent to the non-steel based facing that is a combustible material or a low melting temperature thin metal foil, so as to be between the non-steel based facing and the foam core. The fire barrier layer may be continuous and may be continuously bonded (in a single area without spaces therein) to the non-steel based facing and to the foam layer. For example, the fire barrier layer may be in direct contact with an aluminum foil facing having a thickness of 0.05-0.1mm. The fire barrier includes one layer having expandable graphite dispersed in the polymer matrix, which polymer matrix may be formed by reacting an isocyanate-reactive component with an isocyanate component.

The fire barrier layer may have a density of at least 100 g/L (e.g., from 100 g/L to 1200 g/L, from 150 g/L to 800 g/L, from 175 g/L to 650 g/L, from 225 g/L to 300 g/L, etc.). The fire barrier layer may have a thickness from 1 mm to 30 mm (e.g., 2 mm to 25 mm, 3 mm to 20 mm, 5 mm to 15 mm, etc.). The fire barrier layer may be rigid or semi-rigid, e.g., the fire barrier layer may not be brittle. The fire barrier layer may have a glass transition temperature of at least 50 °C (e.g., about 100 °C). The fire barrier layer may have a Young's modulus according to UNI EN ISO 604 of at least 30 MPa (e.g., approximately 80 MPa). The optional at least one additional fire barrier layer, if included, may independently be positioned between the foam core and a facing.

The fire barrier layer provides thermal barrier properties, i.e., a temperature gradient in fire conditions. This is intended to improve the insulation endurance during a fire resistance test. The suitability of a material to perform as thermal barrier material may be evaluated, e.g., in a laboratory scale by measuring temperature increase with a thermocouple positioned (e.g., at the interface between the thermal barrier material and the foam layer, or positioned in the foam layer at a certain distance from the interface, or on the external surface (non-exposed side) of the tested product.

Expandable graphite is used to provide thermal barrier properties in the fire barrier layer. Expandable graphite (an intercalation compound of graphite also referred to as "exfoliating graphite") is a particulate expandable under fire conditions. Expandable graphite may be prepared, e.g., by immersing natural flake graphite in a bath of chromic acid, then concentrated sulfuric acid. According to an exemplary embodiment, the expandable graphite particles have a particle size from 200 $\mu$m to 300 $\mu$m. The particle size distribution may be from minimum of 65% to 85% > 50 mesh. The expandable graphite may be capable of expansion to at least 200 times (e.g., 250 to 350 times) its initial volume. The rate of expansion (min) may be from 275 $cm^3$/g to 400 $cm^3$/g. Different expandable graphites may have different expansion temperatures. According to an exemplary embodiment, the expandable graphite begins its expansion at around 160 °C to 225 °C. Exemplary types of expandable graphite include QUIMIDROGA Grade 250, NORD-MIN® KP 251 (commercially available from Nordmann Rassmann), and GHL Px95 HE (commercially available from LUH).

Without intending to be bound to any theory, when exposed to the heat of a developing fire, the fire barrier layer undergoes a physical/chemical modification leading to the formation of a highly expanded porous carbonaceous char. When the fire barrier layer is on the fire side (i.e., the hot side that is closer to the fire), the fire barrier layer helps to protect the foam core from flame impingement. When the fire barrier layer is on the cold side (i.e., side further away from the fire), the fire barrier layer helps by sealing cracks in the foam core and contributes to provide thermal barrier properties.

According to embodiments, the amount of expandable graphite present per unit area of the panel is calculated based on layer thickness, layer density, and weight percent of expandable graphite in the fire barrier layer (expressed as weight percentage divided by 100, as would be understood by a person skilled in the art) incorporated in the reactants:

$$\begin{array}{ll} \text{Amount of expandable} & = \text{(wt\% of expandable graphite to total components in fire} \\ \text{graphite per unit area} & \text{barrier layer)} / 100 \text{ x (density of fire barrier layer) x (thickness} \\ & \text{of fire barrier layer)} \end{array}$$

It is believed that the amount of expandable graphite per unit area determines the attainable expansion of the layer and the extent of fire protection. The amount of expandable graphite per unit area is 250 g/m$^2$ to 1200 g/m$^2$, preferably 300 g/m$^2$ to 1100 g/m$^2$, 500 g/m$^2$ to 1250 g/m$^2$, 700 g/m$^2$ to 1200 g/m$^2$, 750 g/m$^2$ to 1100 g/m$^2$, 850 g/m$^2$ to 1100 g/m$^2$, etc.).

The expandable graphite is dispersed in (e.g., is randomly dispersed throughout) the polymer matrix. The polymer matrix may be a polyisocyanurate (PI) polymer matrix, in which the term "PI" is used herein for polyisocyanate-based polymers formed at a high isocyanate index. The polymer matrix will include urethane groups, isocyanurate groups, and/or urea groups. Polyisocyanate-based polymer typically has good adhesive properties to the foam core, further fire barrier layers and/or facings.

The polymer matrix is formed from a polyol component including at least one polyol reactant and an isocyanate component including at least one isocyanate-containing reactant. In an exemplary embodiment, the polyol component may include at least one long chain polyol having an equivalent weight (measured as g/mole equivalents) of more than 200, more than 250, more than 1000, and/or more than 1200. For example, the equivalent weight is from 220 to 1800, 250 to 1600, 200 to 300, and/or 1500 to 1700. Equivalent weight (EW) is defined as the weight of the compound per reactive site. The equivalent weight may be calculated as EW = 56.1 X 1000/OH where OH = hydroxyl number. One or more non-long chain polyols may also be included in the polyol component. For example, the at least one polyol reactant may consist of one or more long chain polyols, i.e., no other polyols are present. Long chain polyols control crosslinking density and reduce brittleness. Such polyols are also believed to promote bonding to facings (e.g., non-steel based facings). According to an exemplary embodiment, the EW may be greater than 1000, so as to be a toughening modifier.

The long chain polyol of the polyol component may include a polyether polyol and/or a polyester polyol. The long chain polyols are believed to promote bonding to facings e.g. aluminum or composite foil facings. The functionality of the long chain polyol may be from 2 to 3.

Exemplary initiators include propylene glycol, glycerine, and trimethylolpropane. Exemplary polyols include VORANOL™ polyols (polyether polyols available from The Dow Chemical Company), of which examples include VORANOL™ CP 4702 (a polyether polyol formed by adding propylene oxide and ethylene oxide to a glycerine starter, a nominal functionality of 3, and an EW of approximately 1580) and VORANOL™ P1010 (a polyether polyol formed by adding propylene oxide to a propylene glycol starter, a nominal functionality of 2, an EW of approximately 508). Other exemplary polyols include polyester polyols such as aromatic polyster polyols. An exemplary polyester polyol includes STEPANPOL™ polymers (polyester polyols available from Stepan Company), of which examples include STEPANPOL™ PS 70L. Various combinations of polyols may be used to form the polyol component. Other exemplary polyols include VORANOL™ RN490 and VORANOL™ RH360 (polyether polyols formed by adding propylene oxide to sucrose and glycerine, having an average functionality higher than 4 and an EW of 115 and 156 respectively), VORANOL™ RN482 (polyether polyol formed by adding propylene oxide to sorbitol, having a nominal functionality of 6 and an EW of 115), TERCAROL™ 5903 (polyether polyol formed by adding propylene oxide to toluenediamine, having a nominal functionality of 4 and an EW of 127).

Exemplary polyester polyols include aromatic polyester polyols. For example, the polyester polyol may include from 30 wt% to 40 wt% of terephtalic acid, from 5 wt % to 10 wt% of diethyleneglycol, and 50 wt% to 70 wt% of polyethylene glycol. For example, the polyester polyol includes 31.5 wt% of terephtalic acid, 8.5 wt % of diethyleneglycol, and 60 wt% of polyethylene glycol. Other types of polyols may be used such as aliphatic polyester polyols, aliphatic or aromatic polyether-carbonate polyols, aliphatic or aromatic polyether-ester polyols, and polyols obtained from vegetable derivatives.

The isocyanate component may include isocyanate-containing reactants that are aliphatic, cycloaliphatic, alicyclic, arylaliphatic, and/or aromatic polyisocyanates and derivatives thereof. Exemplary derivatives include allophanate, biuret, and NCO terminated prepolymer. According to an exemplary embodiment, the isocyanate component includes at least one aromatic isocyanates, e.g., at least one aromatic polyisocyanate. For example, the isocyanate component may include aromatic diisocyanates such as at least one isomer of toluene diisocyanate (TDI), crude TDI, at least one isomer of diphenyl methylene diisocyanate (MDI), crude MDI, and/or higher functional methylene polyphenyl polyisocyanate. As used herein MDI refers to polyisocyanates selected from diphenylmethane diisocyanate isomers, polyphenyl methylene polyisocyanates and derivatives thereof bearing at least two isocyanate groups. The crude, polymeric, or pure MDI may be reacted with polyols or polyamines to yield modified MDI. Blends of polymeric and monomeric MDI may also be used. The MDI advantageously has an average of from 2 to 3.5 (e.g., from 2.0 to 3.2) isocyanate groups per molecule. Exemplary isocyanate-containing reactants include VORANATE™ M229 PMDI isocyanate (a polymeric methylene diphenyl diisocyanate with an average of 2.7 isocyanate groups per molecule, available from The Dow Chemical Company).

An isocyanate index for forming the PI polymer matrix may be more than 180, more than 195, more than 300, more than 500, more than 700, more than 1000, more than 1200, and/or more than 1250. The index of the PI polymer matrix may be less than 2000. For example, the isocyanate index may be from 185 to 1500, from 195 to 1400, from 1000 to 1500, from 1200 to 1400, and/or from 1250 to 1350. The term "index" refers to the isocyanate index, which is the number of equivalents of isocyanate-containing compound added per 100 theoretical equivalents of isocyanate-reactive compound. An isocyanate index of 100 corresponds to one isocyanate group per isocyanate- reactive hydrogen atom present, such as from water and the polyol composition. A higher index indicates a higher amount of isocyanate-containing reactant. A high isocyanate index is believed to lead to better thermal stability (as shown in the examples) and reaction-to-fire behavior, including reduced smoke production.

The functionality and equivalent weight (EW) of polyol reactants for forming the polymer matrix (such as the PI polymer matrix) may be selected depending on the isocyanate index. For the preparation of a suitable PU polymer matrix, polyol reactants may be selected to comprise at least a polyol having a functionality not lower than 3 and, as an average for the overall polyol composition to provide an equivalent weight (EW) not higher than 200. Exemplary polyols having a hydroxyl functionality not lower than 3.0 may be selected among polyether polyols obtained by alkoxylation of high functional initiators, such as glycerine, trimethylolpropane, sucrose, sorbitol, and toluenediamine.

The composition for forming the fire barrier layer may further include at least one flame retardant. The flame retardant may be present in an amount from 1 wt% to 50 wt% (e.g., 1 wt% to 30 wt%, 1.5 wt% to 20 wt%, 1.5 wt% to 10 wt%, 1.5 wt% to 8 wt%, 2 wt% to 5 wt%, 2.5 wt% to 4 wt%, 2.5 wt% to 3.5 wt%, etc.), based on the total weight of the composition for forming the fire barrier layer (for forming the polymer matrix). The flame retardant may be a solid or a liquid. The composition for forming the fire barrier layer may include a non-halogenated flame retardant and/or a halogenated flame retardant. Exemplary flame retardants include melamine, phosphorous compounds with or without halogens, aluminum containing compounds, magnesium based compounds, nitrogen based compounds with or without halogens, chlorinated compounds, brominated compounds, and boron derivatives. For example, the polymer matrix may include at least one non-halogenated flame retardant that includes phosphorous.

A catalyst may be used in forming the polymer matrix, e.g., at least one catalyst known in the art may be used. Exemplary catalysts include trimerisation catalysts, which promote reaction of isocyanate with itself. Examples of catalysts include tris(dialkylaminoalkyl)-s-hexahydrotriazines (such as 1,3,5-tris(N,N-dimethylaminopropyl)-s-hexahydrotriazine), DABCO™ TMR 30, DABCO™ K-2097 (potassium acetate), DABCO™ K15 (potassium octoate), POLYCAT™ 41, POLYCAT™ 43, POLYCAT™ 46, DABCO™ TMR, CURITHANE™ 52, tetraalkylammonium hydroxides (such as tetramethylammonium hydroxide), alkali metal hydroxides (such as sodium hydroxide), alkali metal alkoxides (such as sodium methoxide and potassium isopropoxide), and alkali metal salts of long-chain fatty acids having 10 to 20 carbon atoms (and in some embodiments, pendant hydroxyl groups).

A chain extender, a cross-linking compound, and/or another additive may be used in forming the PI polymer matrix. Exemplary chain extenders include dipropylene glycol, tripropylene glycol, diethyleneglycol, polypropylene, and polyethylene glycol.

The fire barrier layer in the insulation panel may impart thermal barrier properties such as a temperature gradient in fire conditions. The fire barrier layer may improve the fire behavior of a building element. The fire barrier may delay the heating and combustion of the underlying foam, e.g., therefore reducing the heat release rate and flame spread when the insulating panels are exposed to a fire. Heat release rate, flame spread, and other reaction-to-fire parameters such as smoke development are evaluated according to EN 13823 (such as European Standard EN 13823:2010). Exemplary standardized assemblies as related to EN13823 are described in EN15715 (includes instructions for mounting and fixing), and product standards such as EN13165 and prEN16491. These standards may specify methods to evaluate the reaction-to-fire of panels as placed in the market and in standardized assemblies simulating end-use applications.

The suitability of a material to perform as fire barrier material may be evaluated in a laboratory by placing a sample of the material on a desired skin into a muffle furnace heated with a temperature curve comparable to a fire resistance test, and then verifying the absence of cracks and voids and checking for residual mechanical properties. In such conditions, the fire barrier material may form a coherent, strong char layer that protects and may help reduce the possibility of cracking of the underlying foam core. The suitability of the material may also be evaluated placing a sample of panel, cut to dimensions, to close the opening of a muffle furnace heated with a temperature curve comparable to a fire resistance test and measuring a temperature increase with a thermocouple positioned, e.g., at the interface between the fire barrier material and the foam core, positioned in the foam core at a certain distance from the facing material layer, or positioned on the non-exposed surface of the sample.

The fire barrier layer may additionally impart improved mechanical strength to the insulation panel, e.g., the fire barrier layer may help with fixing the insulation panel with fasteners to substrates or supporting profiles and/or may provide dent resistance for easier handling. The fire barrier layer having expandable graphite dispersed in the PU or PI polymer matrix may impart improved mechanical strength thanks to the superior toughness of the polymer matrix and the relatively higher density of the layer when compared with the underlying insulation foam

Further Fire Barrier Layers

One or more further fire barrier layers may be present. A further fire barrier layer may be arranging between the non-steel based facing and the foam layer on either or both sides of a first fire barrier layer that includes expandable graphite (as discussed above) and/or may be between another facing and the foam layer. Where one or more further fire barrier layers are present between the facing and the foam layer, the layers may be formed in any order on the facing. If the further fire barrier layer does not have adhesive properties, it may be desirable to position it between the first fire barrier layer and the foam layer. Also, where a fire barrier layer does not have good adhesive properties, a separate adhesive may be used. For example, a thin layer of non-expanded or slightly expanded polyisocyanate based polymer formed from an isocyanate and a polyol may be used to promote adhesion.

Fire barrier layers (including the fire barrier layer having expandable graphite and optionally the one or more further fire barrier layers) may provide some or all of thermal barrier properties, structural integrity barrier properties, and endothermic properties of a panel. Where these properties are provided by the same layer, they may be provided by different materials or by the same material within that layer. The suitability of a material to perform as a structural integrity barrier material can be evaluated, e.g., by placing a sample of the said material applied on a skin (e.g., metal skin) into a muffle heated with a temperature curve comparable to a fire resistance test, verifying the absence of cracks and voids, and checking for residual mechanical properties. The structural integrity barrier material may form a coherent, strong char layer that will reduce the tendency of the underlying foam core to crack.

Endothermic materials are those that are adapted to absorb heat via an endothermic event (e.g., water evaporation). For example, the further fire barrier layer may include some form of embedded water that is liberated and evaporated under fire conditions. Exemplary materials are discussed in, e.g., International Publication No. WO 2013/098859 (i.e., PCT/IT2011/000418).

An exemplary further fire barrier layer is a layer that includes mineral wool, which may provide thermal barrier properties. For example, a layer of mineral wool of thickness 30 to 50 mm may be included in the panel. Exemplary mineral wool blankets and/or slabs are commercially available (e.g., ROCKWOOL™ from Rockwool Italia S.p.A). The layer of mineral wool may be positioned between the fire barrier layer including expandable graphite and the foam core layer.

Other exemplary further fire barrier materials are discussed in, e.g., International Publication No. WO 2013/053566 (i.e., PCT/EP2012/068069). These exemplary fire barrier materials include a ceramifying mixture of inorganic compounds in a polymer matrix, an inorganic modified adhesive polyurethane/polyurea coating, glass fibers in a polymer matrix, porous silica in a polymer matrix, and hollow glass microspheres in a polymer matrix.

Ceramifying mixture of inorganic compounds in a polymer matrix refers to a dispersion of a ceramifying mixture of inorganic compounds in a polymer matrix that may be used as a structural integrity barrier material in a further fire barrier layer. The ceramifying composition may be present in an amount of 30 wt% to 70 wt%, based on the total weight of a single fire barrier layer. The term ceramifying composition includes compositions that decompose and undergo chemical reaction under fire conditions to form a porous, self-supporting ceramic product. Exemplary mixtures include silicate minerals and inorganic phosphates. An additional inorganic filler and/or heat expandable material may be present. The ceramifying mixture may, e.g., include some or all of aluminum trihydroxide, talc, and ammonium polyphosphate. Exemplary mixtures include aluminum trihydroxide (ATH)/talc/ammonium polyphosphate (APP) and talc/APP/zinc borate/expandable graphite.

The polymer matrix, in which the ceramifying mixture of inorganic compounds is dispersed, may be a polyurethane-modified polyisocyanurate polymer. Such polymers may be formed from a polyol (e.g. a polyester polyol) and an isocyanate (e.g. an organic polyisocyanate such as a polymeric methylene diphenyl diisocyanate having approximately 2.7 functionality). A catalyst may be used. An appropriate index is 180 or more. Exemplary polyols include VORAMER™ polyols (available from The Dow Chemical Company). According to another exemplary embodiment, the polymer matrix may be a polyurethane (PU) polymer. Such polymers may be formed from a polyol (e.g. a polyether polyol) and an isocyanate (e.g., an organic polyisocyanate having approximately 2.7 functionality). A catalyst may be used. An appropriate index is 80 to 180. Exemplary polyols include VORANOL™ polyols (available from The Dow Chemical Company).

Adhesive polyurethane/polyurea refers to an adhesive polyurethane/polyurea coating formed by reaction of sodium silicate aqueous solution (common name water glass) with a hydrophilic prepolymer that can be used as a structural integrity barrier material in a further fire barrier layer. International Publication No. WO 2006/010697 (Huntsman) relates to such waterglass based PU/polyurea coatings. Other fire barrier materials may be dispersed in the coating. An exemplary hydrophilic polyurethane pre-polymer is a Dow HYPOL™ class isocyanate. Such a coating may act as an endothermic material as some water may remain entrapped in the polymer and/or inorganic networks of the coating, since viscosity rises rapidly during the polymer formation reaction. Thus, when the coating is heated the temperature on a non-exposed face of the polymer may remain at about 100°C for some time while water is evaporated.

Glass fibers refer to fibers that can be used as a structural integrity barrier material in a further fire barrier layer. For example, chopped glass fibers of length 5 mm to 75 mm may be used. Alternatives to glass fibers include, e.g., rock fibers, basalt fibers, and carbon fibers. The fibers may be dispersed in a polymer matrix, e.g., a polymer matrix of the type discussed above with respect to ceramifying mixture of inorganic compounds embedded in a polymer matrix.

Porous silica refers to a material that can be used as a thermal barrier in an additional fire barrier layer. The porous silica may be present in an amount from 1 wt% to 10 wt%, based on the total weight of the single fire barrier layer. An exemplary form of porous silica is nanoporous silica and particularly silica aerogel. Porous silica may be used dispersed in a polymer matrix. The polymer matrix may be pre-formed or may be formed in situ. Exemplary, pre-formed dispersions of nanoporous silica in polymer matrix are commercially available as "aerogel blankets" (e.g., Cabot Thermal Wrap™). These may include granules of silica aerogel dispersed in non-woven polymer fibers, e.g., of polyethylene and/or polyester. Dispersions of nanoporous silica in a polymer matrix may be formed in situ using commercially available silica aerogel powder. An exemplary commercially available silica aerogel nanoporous powder is Cabot Nanogel™.

According to exemplary embodiments, porous silica dispersed in a hydrophilic polymer matrix, an adhesive polyurethane/polyurea coating with structural integrity barrier properties of the type discussed above, or a polyurethane or polyurethane-modified polyisocyanurate coating of the type discussed under "Ceramifying mixture of inorganic compounds in polymer matrix" above, may be used.

Hollow glass microspheres refers to hollow glass based material that can be used as a hybrid structural integrity barrier material and thermal barrier material in a further fire barrier layer. Exemplary materials are discussed in International Publication No. WO 2010/065724. Exemplary materials are commercially available (e.g., S35 Glass Bubbles™ from 3M). The particles may be used in a polymer matrix, e.g., using one of the polymer materials discussed above. The hollow glass microspheres may have an average diameter in the range of 10 $\mu$m to 120 $\mu$m. The hollow glass microspheres may be present in an amount of 5 wt% to 50 wt%, based on the total weight of a single fire barrier layer. For example, a polymer matrix forming the fire barrier layer including hollow glass microspheres is filled with 20 wt% of S35 microspheres.

Where the further fire barrier layer does not have good adhesive properties, a separate adhesive may be used. For example, if the further fire barrier layer does not have adhesive properties, it may be desirable to position it between the foam core and the first fire barrier layer that includes expandable graphite.

Facings

As explained above, the panel includes a non-steel based facing. A first non-steel based facing may be arranged near the first fire barrier layer (which includes expandable graphite) so that the first fire barrier layer is between the first non-steel based facing and the foam layer. By combustible material it is meant that the material would be substantially fully consumed during a fire event (e.g., such that the material ignites and readily burns when exposed to a flame). By glass-fleece based material it is meant that the facing includes a layer that includes glass fleece such as a glass-fleece substrate. By low melting temperature thin metal foil it is meant that the metal foil has a melting temperature below at least 800 °C and a thickness of 0.05-0.1mm. For example, the melting temperature of the low melting temperature thin metal is below at least 750 °C, below at least 700 °C, and/or below at least 660 °C. The melting temperature may be from 100 °C to 750 °C, from 100 °C to 660 °C, from 300 °C to 660 °C, from 300 °C to 650 °C, from 300 °C to 640 °C, etc. The non-steel based facings for the insulation panel may be selected from exemplary non-steel based facings that include aluminum (such as aluminum foil), a composite multi-layer foil, stressed skins of non-steel metal foil, glass based material that includes glass-fleece, polymer membrane based material, and wood-based material.

A second facing (e.g., a metal facing or a second non-steel based facing) may be included in the panel on the opposite face from the first non-steel based facing. The first and second facings may be the same or different. For example, the material of the first and second facings may be independently selected from aluminum (such as aluminum foil), a composite multi-layer foil, stressed skins of non-steel metal foil, glass based material that includes glass-fleece, polymer membrane based material, and wood-based material. Each facing (such as the metal based facings and the glass fleece based facings) may independently have a thickness from 0.01 mm to 1 mm (e.g., 0.05 to 0.6 mm, 0.05 to 0.1 mm, 0.06 to 0.095 mm, 0.07 to 0.09 mm, etc.) with the proviso that where the first non-steel based facing is a low melting temperature thin metal foil it has a thickness of 0.05-0.1mm. According to an exemplary embodiment, the first facing may be made of a same material and have a same thickness as the second facing.

Exemplary aluminum foils for the second facing may range in thickness from 25 to 200 microns (e.g., 40, 60, 80, 200 microns - 60 or 80 microns are also suitable for the first facing). The aluminum foils may be embossed or textured and/or may be lacquered. Exemplary composite foils may include multiple ply laminates of polymers, papers and/or aluminum. For example, the composite facings may be aluminum/paper laminates, aluminum/paper/aluminum laminates, and/or aluminum/paper/metalized PET (such as the ones commercially available from Walki Group) Exemplary glass-fleece or glass tissues facings may be mineral coated or bituminous coated.

Foam Layer (Foam Core)

The panel includes an insulating foam layer (also referred to as a foam core). The foam core may be rigid. The foam core may have a thickness from 20 mm to 300 mm. The foam core may include polyisocyanurate foam (PIR) and/or polyurethane foam (PUR). For example, the foam core may be formed from a polyol (e.g., combined with a blowing agent and a catalyst) and an isocyanate (e.g., an organic polyisocyanate such as a high functional methylene diphenyl diisocyanate or other isocyanate discussed under the section titled "Fire Barrier Layer" above). The density of the foam core may be from 10 g/L to 100 g/L (e.g., 20 g/L to 80 g/L, 25 g/L to 60 g/L, 30 g/L to 50 g/L, 35 g/L to 48 g/L, etc.)

The isocyanate index for forming the foam core may be 180 or more. For example, the isocyanate index may be less than 500. For example, the isocyanate index may be from 200 to 500, from 250 to 450, from 260 to 400, etc. The isocyanate index for forming the foam layer may be less than the isocyanate index for forming the fire barrier layer including expandable graphite. According to an exemplary embodiment the isocyanate index for forming the fire barrier layer including expandable graphite may be 4 to 6 times greater than the isocyanate index for forming the foam layer. Exemplary materials for forming the foam layer include VORATHERM™ polyols, VORATHERM™ catalysts, and VORANATE™ isocyanates (all available from the Dow Chemical Company). An exemplary blowing agent is n-pentane.

The foam core may optionally include further components, e.g., for reinforcement and/or to improve reaction to fire properties. For example, glass fibers may be embedded in the foam core.

Panel Structure

An exemplary panel structure is shown in FIG. 1, in which a panel 10 includes a first facing A1, a fire barrier layer B, a further fire barrier layer C, a foam core D, and a second facing A2 arranged in that order. For example, the fire barrier layers B and C contact the first facing A1 and the foam core D, respectively. In another exemplary arrangement, the further fire barrier layer C may be excluded. Other exemplary panel structures are possible, e.g., one or more further fire barrier layers may be included on either side of the foam core as discussed above.

Manufacturing Process

An exemplary method of forming a panel as described herein includes providing a first facing with a fire barrier layer in the form of a liquid reaction mixture comprising a dispersion in an isocyanate-based reaction mixture of expandable graphite, and applying an insulating foam layer in the form of a liquid reaction mixture to the fire barrier layer. The method may further include applying a second facing to the insulating foam layer. For example, the sandwich panels may be manufactured by a continuous process or a discontinuous process (e.g., a continuous process or a discontinuous process known in the art). A continuous lamination process may use a double belt/band arrangement, for example, in which a liquid reaction mixture for forming a foamed polymer is deposited (poured or sprayed) onto a lower facing sheet, which may be flexible or rigid. An upper facing sheet may be contacted with the foam-forming mixture before it becomes cured and rigid. As an alternative ("inverse laminator"), the reaction mixture may be deposited onto the upper facing sheet. The discontinuous process may use molds.

The method of manufacturing the panel may include a stage of forming the fire barrier layer by reacting the polyol reactant with the isocyanate-containing reactant to form the polymer matrix having the expandable graphite dispersed therein. Accordingly, the liquid fire barrier layer forming composition containing dispersed expandable graphite may be provided by mixing a polyol component, an isocyanate component, and the expandable graphite. The fire barrier layer forming composition may be a liquid isocyanate-based reaction mixture. Methods for introduction of the expandable graphite are discussed below.

The polyol component and/or the isocyanate component may also include one or more catalysts, cross-linkers, chain extenders, surfactants, flame retardants, smoke suppressants, drying agents, fillers, and other additives (e.g., additives that are known in the art). Some catalysts are solids or crystals and may optionally be dissolved in a proper solvent (e.g., the polyol, water, dipropylene glycol, or another carrier).

Various methods may be used for introducing expandable graphite into the reaction mixture. The expandable graphite may be separately provided directly to the reaction mixture and/or may be provided in the isocyanate component and/or the isocyanate-reactive component (e.g., as a dispersion with the polyol component). For example, the expandable graphite may be pre-mixed with the isocyanate-reactive component, e.g., in an amount from 25 wt% to 45 wt% (e.g., 30 wt% to 40 wt%, 35 wt% to 40 wt%, etc.) based on the total weight of the resultant mixture that includes the polyol component, the expandable graphite, and may include other optional additives such as a flame retardant. Additionally or alternatively, the expandable graphite may be mixed with the isocyanate component. The expandable graphite may be dispersed at high concentration into a carrier that is introduced into the reaction mixture. For example, the expandable graphite may be dispersed at a high concentration into a carrier (e.g., in an amount of at least 50 wt%, based on a combined weight of the expandable graphite and the carrier), which is then introduced into the reaction mixture. The expandable graphite may be introduced directly into the reaction mixture as a solid that is then dispersed in the liquid reaction mixture.

Exemplary methods for introducing the expandable graphite include the following:

(1) A pre-mixture of expandable graphite with the polyol and/or an isocyanate component may be delivered using a low-pressure gear pump to the mixing head, where it is mixed with the parent component by means of a dynamic stirrer. (2) A dispersion of expandable graphite (expandable graphite slurry) in a carrier (e.g., of polyol or a flame retardant) may be dosed by mean of a low-pressure gear pump as an axial stream into a high-pressure mixing head. According to this embodiment, the expandable graphite slurry may enter the mixing head through a nozzle orthogonal to the two high-pressure impingement streams of polyol component and isocyanate component. An exemplary apparatus is Cannon SoliStream™. (3) Expandable graphite may be directly introduced in the mixing head, e.g., by using a Desma™ apparatus (Desma™ Tec is a mixing head which allows mixing of liquid polyol component, liquid isocyanate component, and solid expandable graphite via a granulate screw drive). (4) Expandable graphite may be added externally after the reaction mixture has exited the mixing head.

The fire barrier layer forming composition may be applied on (e.g., directly on) the a lower facing (such as the first non-steel based facing). For example, the fire barrier layer is formed on the upper surface of a lower facing by application of a liquid reaction mixture to the lower facing, which is of course easier than application to the underside of an upper facing. The one or more further fire barrier layers, if present, may be applied in a similar method. Additionally or alternatively, one or more further fire barrier layers may be applied in solid form. A fire barrier layer in solid form may be secured with an adhesive composition. If an adhesive is used, the adhesive may be applied in liquid form. If a previous fire barrier layer has been applied in liquid form an adhesive composition may not be necessary.

There may be a delay between the stage of applying the fire barrier layer forming composition and the stage of applying the foam layer forming composition to allow for gelling of the fire barrier layer. For example, this delay is 10 seconds or more.

A continuous lamination process may include the following: (i) conveying a lower facing sheet, (ii) dispensing on the lower facing sheet a liquid reaction mixture for forming the fire barrier layer, (iii) allowing the fire barrier layer reaction mixture to solidify at least partially, (iv) dispensing a liquid reaction mixture for forming the core layer on top of the fire barrier layer, (v) conveying an upper facing sheet, (vi) allowing the core layer reaction mixture to expand, cure, and bond to the facing and fire barrier layer (e.g., under continuous pressure using a double conveyor). Separate panels may then be formed by cutting.

A discontinuous process using molds may include positioning the facings in a mold (e.g., a heated mold) and injecting the reaction mixture for forming the insulating foam layer (e.g., using a foaming machine) so as to fill the mold and adhere to the facings and/or any other layer. The one or more fire barrier layers may be added before the facings are positioned in the mold or while the facings are in the mold (before foam injection).

An arrangement to assist in even distribution of the liquid reaction mixtures across the width of the prospective panel may be used. For example, a discharging hose having an end travelling across a specific width (e.g., by means of a swing bar) or a pipe extending across the width of the line and provided with a number of discharging holes may be used.

Further Aspects

Embodiment relate to a unique combination of fire-behavior and thermal insulation, and load-bearing behavior. Particular embodiments relates to insulated roofing applications, even more specifically when technical equipments are installed (e.g. solar elements) as these roofs are exposed to intensive walking during installation and maintenance works. Moreover, the panels of the embodiments are easy to manufacture. As mentioned above, application of the fire barrier layer to the lower facing allows the panels to be manufactured easily using a continuous process. Whilst the subject matter has been described with reference to the illustrated embodiments and the Examples, the skilled person will appreciate that various modifications are possible within the scope of the claims.

All parts and percentages are by weight unless otherwise indicated. All descriptions of molecular weight are based on a number average molecular weight, unless otherwise indicated. Features described in connection with any aspect of the various embodiments discussed herein can be used in combination with any other aspect of the various embodiments.

Examples

The following materials are used:

| VORATHERM™ CN 617 | A formulated polyol (available from The Dow Chemical Company). |
|---|---|
| VORATHERM™ CN 804 | A formulated polyol (available from The Dow Chemical Company). |
| VORATHERM™ CN 815 | A formulated polyol (available from The Dow Chemical Company). |
| VORANOL™ CP 4702 | A polyoxypropylene-polyoxyethylene polyether polyol having a nominal functionality of approximately 3 and a number average molecular weight of approximately 4740 g/mol (available from The Dow Chemical Company). |
| Polyester Polyol | An aromatic polyester polyol obtained by the esterification of approximately 31.5 wt% terephthalic acid, 8.5 wt % diethyleneglycol, and 60 wt% polyethylene glycol, having a number average molecular weight of 200 g/mol and the esterified polyester molecule having a nominal functionality of approximately 2 and a number average molecular weight of approximately 520 g/mol. |
| Expandable Graphite 1 | An expandable graphite, having a particle size distribution of min 70%>50 mesh, a starting expansion temperature from 180-220 °C, a rate of expansion of min 300 cm$^3$/g, a minimum carbon content of 95 wt%, and a maximum moisture content of 1 wt% (available from LUH as the product GHL PX95 HE). |
| Expandable Graphite 2 | An expandable graphite, having a particle size distribution of min 80%>50 mesh, a starting expansion temperature of approximately 170 °C, a rate of expansion of min 350 cm$^3$/g, a minimum carbon content of 98 wt%, and a maximum moisture content of 1 wt% (available from Quimidroga as the product EXFLAM EG350). |
| VORACOR™ CM 639 | A catalyst (available from The Dow Chemical Company). |
| VORATHERM™ CN 626 | A catalyst (available from The Dow Chemical Company). |
| DABCO® K2097 | A catalyst that is a solution of potassium acetate in diethylene glycol (available from Air Products & Chemicals). |
| Moisture Scavenger | A desiccant paste including 50 wt% of a zeolite powder suspension in castor oil (available from The Dow Chemical Company). |
| Flame Retardant | A triethyl phosphate (available from Sigma-Aldrich). |
| Catalyst A | A catalyst including sodium N-(2-hydroxy-5-nonilphenyl) methyl-N-methyl glycinate in a glycol (available from The Dow Chemical Company). |
| Catalyst B | A commercial catalyst availbe under the name of DABCO® TMR-30 (available from Air Products). |
| VORANATE™ M 600 | A polymeric MDI, having an average NCO content of approximately 30.5 wt% (available from The Dow Chemical Company). |
| VORANATE™ M 229 | A polymeric MDI, having an average NCO content of approximately 31.0 wt% (available from The Dow Chemical Company). |

Sample panels for Working Examples 1 to 4 and Comparative Examples A are prepared using at least one aluminum facing and a foam core layer prepared using a composition according to one of formulations of Samples A1, A2, or A3 shown in Table 1, below. Working Examples 1 to 4 further include a fire barrier layer prepared using a composition according to one of formulations Samples B1, B2, or B3 shown in Table 2, below.

In particular, to form a reaction mixture for forming the foam core layer, an isocyanate-reactive component is formed by mixing the polyol (one of VORATHERM™ CN 617, VORATHERM™ CN 804, and VORATHERM™ CN 815), the catalyst (one of VORACOR™ CM 639 and VORATHERM™ CN 626), and n-pentane.

**Table 1**

|  | Sample A1 | Sample A2 | Sample A3 |
|---|---|---|---|
| **Foam Core forming Composition A (parts by weight)** | | | |
| VORATHERM™ CN 617 | 100 | -- | -- |
| VORATHERM™ CN 804 | -- | 100 | -- |
| VORATHERM™ CN 815 | -- | -- | 100 |
| VORACOR™ CM 639 | 4.5 | -- | -- |
| VORATHERM™ CN 626 | -- | 3.8 | 3.6 |
| n-pentane | 13 | 12.5 | 12.6 |
| VORANATE™ M 600 | 241 | 171 | 195 |
| **Foam Core Composition A Properties** | | | |
| Isocyanate Index | 375 | 294 | 270 |

A process for forming the foam core layer of each of the panel samples includes providing the isocyanate-reactive component pre-mixture (i.e., all the components except for VORANATE™ M 600) for each of A1, A2, and A3, according to the formulations shown in Table 1, above. Then the pre-mixture and VORANATE™ M 600 are delivered to the mixing head of a mix-dispensing machine (e.g., a high pressure polyurethane machine), where the pre-mixture and the isocyanate are mixed by mean of high-pressure impingement to form foam layers. The thermal conductivity of the resultant foam core layer at 10°C W/(m*K) of A1 is 0.0241 and of A2 is 0.0231.

To form a reaction mixture for forming the fire barrier layer, an isocyanate-reactive component is formed by mixing the polyol (VORANOL™ CP 4702 or Polyester Polyol), the expandable graphite, and the other additives shown below in Table 2 (except the isocyanate VORANATE™ M 229 that forms the separately added isocyanate component).

**Table 2**

|  | Sample B1 | Sample B2 | Sample B3 |
|---|---|---|---|
| **Fire Barrier Layer forming Composition B (parts by weight)** | | | |
| VORANOL™ CP 4702 | 82 | 82 | -- |
| Polyester Polyol | -- | -- | 81 |
| Expandable Graphite 1 | 62 | -- | -- |
| Expandable Graphite 2 | -- | 62 | 49 |
| DABCO® K2097 | 1.64 | 1.64 | -- |
| Moisture Scavenger | 9 | 9 | 5.5 |
| Flame Retardant | 9 | 9 | 13.5 |
| Catalyst A | -- | -- | 2.2 |
| Catalyst B | -- | -- | 0.6 |
| VORANATE™ M 229 | 147 | 147 | 92 |
| **Fire Barrier Layer Composition B Properties** | | | |
| Isocyanate Index | 1300 | 1300 | 200 |
| Amount of expandable graphite in Composition B (wt%) | 20 | 20 | 20 |

A process for forming the fire barrier layer of each of the panel samples includes providing the isocyanate-reactive component pre-mixture (i.e., all the components except for VORANATE™ M 229) for each of Samples B1, B2, and B3, according to the formulations shown in Table 2, above. Then the pre-mixture and VORANATE™ M 229 are delivered to the mixing head of a mix-dispensing machine such as a Low Pressure SAIP machine equipped with a rotating mechanical mixer.

The foam core layers of Table 1 and/or the fire barrier layers of Table 2, above, are used to form Working Examples 1-4 and Comparative Examples A and B, according to Table 3, below. In particular, for Working Examples 1-4, a fire barrier layer according to Samples B1, B2, or B3 is formed onto a 0.08 mm embossed aluminum facing. The foam core, according to Samples A1, A2, or A3, is then formed on the fire barrier layer. For Comparative Examples A and B, the foam cores according Sample A2 and Sample A1, respectively, are provided onto a 0.08 mm embossed aluminum facing.

**Table 3**

| | Working Example 1 | Working Example 2 | Working Example 3 | Working Example 4 | Comparative Example A | Comparative Example B |
|---|---|---|---|---|---|---|
| Foam core composition | A1 | A2 | A3 | A3 | A2 | A1 |
| Fire barrier layer composition | B1 | B1 | B2 | B3 | -- | -- |
| Overall panel thickness (mm) | 35 | 100 | 100 | 100 | 100 | 35 |
| Panel width (mm) | 1200 | 1000 | 1200 | 1200 | 1000 | 1200 |
| Type of lower facing | Embossed Aluminum (0.08 mm) | Embossed Aluminum (0.08 mm) | Embossed Aluminum (0.08 mm) | Embossed Aluminu m (0.08 mm) | Embossed Aluminum (0.08 mm) | Embossed Aluminum (0.08 mm) |
| Type of upper facing | Lacquered steel (0.5 mm) | Embossed Aluminum (0.08 mm) | Embossed Aluminum (0.08 mm) | Embossed Aluminum (0.08 mm) | Embossed Aluminum (0.08 mm) | Lacquered steel (0.5 mm) |
| Fire barrier layer thickness (mm) | 9 | 15 | 8 | 6 | -- | -- |
| Fire barrier layer mass per area (g/m$^2$) | 1771 | 3954 | 5432 | 4490 | -- | -- |
| Fire barrier layer density (g/L) | 180 | 253 | 625 | 710 | -- | -- |
| Amount of expandable graphite per unit area (g/m$^2$) | 350 | 787 | 1086 | 898 | -- | -- |
| Foam core density (g/L) | 45 | 40 | 38 | 38 | 37 | 44 |
| Gel time foam core composition (seconds) | 28 | 30 | 40 | 40 | 30 | 28 |
| Compressive strength of panel (kPa) | 208 | 228 | 107 | 110 | 154 | N/D |
| Tensile bond strength (lower facing/fire barrier layer) (kPa) | 516 | 155 | 563 | N/D | -- | N/D |

(continued)

|  | Working Example 1 | Working Example 2 | Working Example 3 | Working Example 4 | Comparative Example A | Comparative Example B |
|---|---|---|---|---|---|---|
| Tensile bond strength (fire barrier /PIR foam core) (kPa) | 194 | 177 | 99 | N/D | -- | N/D |
| U-value at 10°C (W/(m2*K)) | 0.76 | 0.26 | N/D | N/D | 0.23 | N/D |
| * N/D means not determined | | | | | | |

To prepare Working Examples 1-4 and Comparative Examples A and B, a SAIP™ continuous line with a double conveyor of 18 meters may be used. The process for forming Working Examples 1-4 includes the following stages: (i) feed a lower facing as specified in Table 3, (ii) dispense the fire barrier layer forming Composition B1, B2, or B3 from a mix-dispensing machine and allow time for the composition to at least partially cure, (iii) dispense the foam core forming Composition A1, A2, or A3 by a SAIP high-pressure (HP) mix-dispensing machine, (iv) feed an upper facing as specified in Table 3, (v) allow the foam core to rise and cure under the constrained rise of a heated double conveyor. Compositions B1, B2, and B3 for forming the fire barrier layer may be adjusted to have a reactivity such that it builds up sufficient viscosity before the subsequent step of pouring Composition A1, A2, or A3 for forming the foam core (i.e. taking into consideration the distance between the two dispensing units and line speed). This may achieve a sharp and distinct separation of the two layers, which may not be possible to attain when the liquid composition are allowed to intermix. The panel exiting from the conveyor is cut to the desired sample size. Comparative Examples A and B may be formed using a similar process, except that the stage of dispensing a fire barrier layer forming composition is excluded.

Working Example 1 is prepared in a continuous process with a double conveyor temperature of approximately 65 °C, a line speed of approximately 8.7 m/minute, a PIR foam component temperature of 22 °C, an upper facing preheating temperature of 38 °C, and a lower facing preheating temperature of 38 °C. Working Example 2 is prepared in a continuous process with a double conveyor temperature of approximately 60 °C, a line speed of approximately 6.0 m/minute, a PIR foam component temperature of 22 °C, an upper facing preheating temperature of 22 °C, and a lower facing preheating temperature of 22 °C. Working Example 3 is prepared in a continuous process with a double conveyor temperature of approximately 65 °C, a line speed of approximately 4.5 m/minute, a PIR foam component temperature of 22 °C, an upper facing preheating temperature of 37 °C, and a lower facing preheating temperature of 30 °C. Working Example 4 is prepared in a continuous process with a double conveyor temperature of approximately 65 °C, a line speed of approximately 4.5 m/minute, a PIR foam component temperature of 37 °C, an upper facing preheating temperature of 38 °C, and a lower facing preheating temperature of 40 °C. Comparative Example A is prepared in a continuous process with a double conveyor temperature of approximately 60 °C, a line speed of approximately 6.0 m/minute, a PIR foam component temperature of 22 °C, an upper facing preheating temperature of 22 °C, and a lower facing preheating temperature of 22 °C. Comparative Example B is prepared in a continuous process with a double conveyor temperature of approximately 65 °C, a line speed of approximately 8,7 m/minute, a PIR foam component temperature of 22 °C, an upper facing preheating temperature of 38 °C, and a lower facing preheating temperature of 38 °C.

For each of Working Examples 1-4 and Comparative Examples A and B, the dispensing of the foam core forming composition, is carried out by connecting a HP mixing head with two fixed plastic pipes ("pokers") with holes centered at a distance of 43 mm. The two pokers are positioned side-by-side across the width of the line. These laydown arrangements are believed to provide good distribution homogeneity.

With respect to Working Examples 1-4, to achieve an even distribution of the fire barrier layer forming composition, the LP mixing head may be connected to a discharging device. For Working Example 1, the discharge device consists of a hose having an end travelling across the width of the conveyor by means of a swing bar. A calibration bar, set at a predetermined gap, is used to help form a film of a substantially constant thickness. For Working Example 2, the hose is connected to a device (such as flow-jet) suitable to provide a fan-shaped dispensing of the reaction mixture. The travelling speed of the swing bar across the width of the conveyor was adjusted to obtain a proper overlap pattern. For Working Example 3 and 4, a static discharge device is used, made connecting the hose with two fixed plastic pipes ("pokers") having holes centered at a distance of 43 mm, said pokers being positioned side-by-side across the width of the line.

The overall thermal conductivity at 10°C of Working Example 1 is measured as 0.0268 W/(m*K), after removing the facings (peeling off the aluminum foil and cutting the foam the closest as possible to the steel facing). The tested specimen has an overall thickness of 31 mm consisting approximately of 7 mm of fire barrier and 24 mm of foam core.

The overall thermal conductivity at 10°C of Working Example 2 is calculated as 0.0260 W/(m*K), based on the measurements of two cut slabs, obtained after removing the facings and cutting the panel in the middle of the thickness. The panels are characterized by improved reaction-to-fire classification.

Fire Reaction Experimental Results

Referring to Table 4, below, Working Example 2 and Comparative Example A are compared with respect to reaction-to-fire according to European Standard EN 13823:2010.

**Table 4**

| | Working Example 2 | Comparative Example A |
|---|---|---|
| Average* Fire Growth Rate Index (0.2 MJ/0.4 MJ - W/s) | 42.4/42.4 | 360/360 |
| Average* Total Heat Release (MJ) | 4.9 | 6.5 |
| Lateral Flame Spread - edge reached? | No | No |
| Average* Smoke Growth Rate Index ($m^2/s^2$) | 4.3 | 102.9 |
| Average* Total Smoke Production ($m^2$) | 47.8 | 88.8 |
| Flaming Droplets or Particles | No | No |
| * Average is determined based on the results of two samples for each of Working Example 2 and Comparative Example 2. | | |

The EN 13823 standard method consists in an intermediate scale fire propagation test where product samples are mounted in a vertical corner configuration (made of two wings, one of dimensions 1.5 x 1 meter, the other 1.5 x 0.5 m) and subjected to a 30 kW output burner. Fire growth rate index (FIGRA), total heat release (THR), and lateral flame spread (LFS) are measured to determine the main fire classification. Additional classifications for smoke and burning brands are determined by measuring smoke growth rate index (SMOGRA), total smoke production (TSP), and the occurrence of burning droplets or particles.

Construction products, excluding flooring, are classified with Euroclass from A to F. In particular, classifications of Euroclasses B, C and D are determined primarily based on heat release parameters in the EN 13823. Additional classifications are obtained for smoke development (s1, s2, s3) and dripping (d0, d1, d2). The mounting of specimen was done in compliance with European Standard EN15715:2007 with the presence of standard vertical and horizontal joints covered with aluminum tape.

Referring to Table 4, above, average values of the 2 specimens of each of Working Example 2 and Comparative Example A are tested according to European Standard EN 13823:2010. With respect to Working Example 2, the samples are oriented exposing to fire the aluminum facing adjacent to the fire barrier. The comparison shows that on average panels of Working Example 2 exhibit lower (better) values for FIGRA, THR, SMOGRA, and TSP. Particularly remarkable are the very low FIGRA and SMOGRA values.

The overall classification for the sample panels of Working Example 2 (average values of the 2 specimens) is Euroclass Bs1d0, resulting for meeting the following requirements: for B: THR less than or equal to 7.5 MJ, FIGRA threshold 0.2 MJ less than or equal to 120 W/s, and LFS not reaching the lateral edge;

for s1: TSP less than or equal to 50 $m^2$ and SMOGRA less than 30 $m^2/s^2$; and

for d0: absence of flaming droplets.

In comparison, the sample panels of Comparative Example A (similar to Working Example 2 with the exception of the absence of the fire barrier), instead obtains the lower classification of Euroclass Ds2d0 (thus, Comparative Example A does not meet the requirements of the upper classification the Euroclass Bs1d0), which results from meeting the following requirements:

for D: FIGRA threshold 0.4 MJ less than or equal to 750 W/s and LFS not reaching the edge;

for s2: TSP less than or equal to 200 $m^2$ and SMOGRA less than or equal to 180 $m^2/s^2$; and

for d0: absence of flaming droplets.

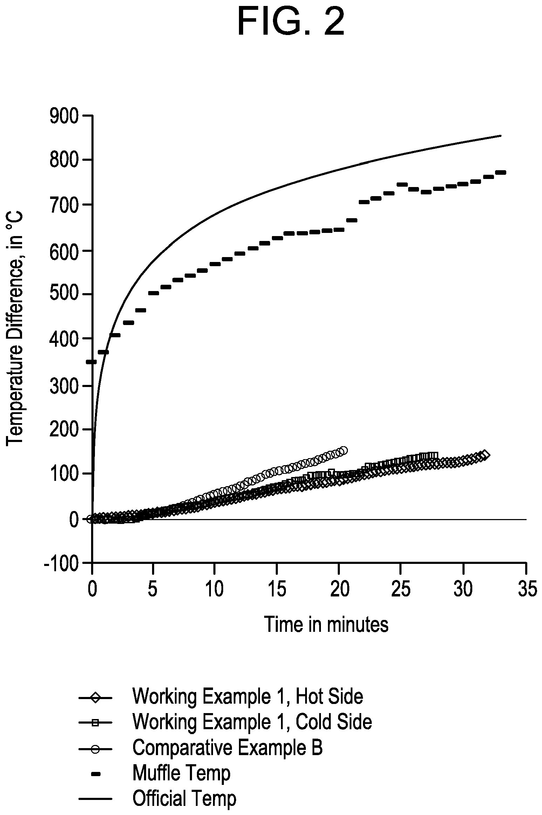

Referring to Table 5, below, the results of a furnace muffle test are reported. The test was carried out with a sample panel of Working Example 1, whereas the fire barrier layer was tested on both the cold side and the hot side, and Comparative Example B. Hot side refers to the position of the fire barrier layer adjacent to the face of the panel closer to the heat source. Cold side refers to the position of the fire barrier layer adjacent to the side of the panel far from the heat source. As shown in FIG. 2, the samples are positioned against the opening of the furnace muffle and the muffle is heated for attempting to approach the standard temperature time profile of EN1363. Thermocouples are placed on the non-exposed surface of the panel sample and time is taken from positioning of the sample until the increase of temperature reaches 140 °C.

**Table 5**

|  | Working Example 1A | Working Example 1B | Comparative Example B |
|---|---|---|---|
| Overall Panel Thickness (mm) | 35 | 35 | 35 |
| Type of facing oriented toward the heat source | Aluminum foil | Steel | Aluminum foil |
| Number of fire barrier layers | 1 | 1 | 0 |
| Location of fire barrier layer | hot | cold | N/A |
| Average sample failure time (minutes) | 32 | 27 | 19 |
| Temperature in the muffle at failure time (°C) | 760 | 730 | 660 |

Referring to Table 5, a fire barrier layer of expandable graphite in the polymer matrix works effectively as a thermal barrier for both orientations (when positioned on the hot side or the cold side) in comparison to when no fire barrier layer is present. Importantly, the fire barrier layer is also effective when the facing exposed toward the heat source is a non-steel facers, such as the Aluminum foil of Working Example 1A.

**Claims**

1.  An insulation panel, comprising:

    a first non-steel based facing (A1) that is a combustible material, a glass-fleece based material, or a low melting temperature thin metal foil of thickness 0.05 to 0.1 mm;
    an insulating foam layer (D); and
    a fire barrier layer (B) adjacent to the first non-steel based facing and between the first non-steel based facing and the insulating foam layer, the fire barrier layer including a dispersion of expandable graphite in a polyisocyanate polymer matrix, the amount of expandable graphite per unit area being from 200 g/m$^2$ to 1250 g/m$^2$.

2.  The panel as claimed in claim 1, wherein the insulation panel has a classification of Euroclass Bs1d0.

3.  The panel as claimed in claim 1 or claim 2, wherein the first non-steel based facing is an aluminum foil, a composite multi-layer non-steel based foil, stressed skins of non-steel metal foil, a glass-fleece, a polymer membrane, or a wood-based material.

4.  The panel as claimed in claim 1 or claim 2, wherein the first non-steel based facing is an aluminum foil and the fire barrier layer is directly adhered to the aluminum foil.

5.  The panel as claimed in any one of claims 1 to 4, wherein the polyisocyanate polymer matrix is formed by reaction at an isocyanate index of more than 180 of an isocyanate-containing reactant and a polyol reactant including a long chain polyol of equivalent weight of more than 200.

6.  The panel as claimed in any one of claims 1 to 5, wherein the fire barrier layer includes a flame retardant.

7.  The panel as claimed in claim 6, wherein an amount of the flame retardant is from 1 wt% to 50 wt%, based on a total weight of the polyisocyanate-based polymer matrix.

8. The panel as claimed in any one of claims 1 to 7, further comprising a second facing (A2) on an opposite side of the foam layer with respect to the first non-steel based facing, the second facing being a steel based facing or an aluminum based facing.

9. A method of forming an insulation panel as claimed in any one of claims 1 to 8, comprising the stages of:

providing on a first non-steel based facing, a fire barrier layer in the form of a first liquid reaction mixture including a dispersion of expandable graphite in an isocyanate-based reaction mixture; and
applying, on the fire barrier layer, an insulating foam layer in the form of a second liquid reaction mixture.

10. The method as claimed in claim 9, wherein the first non-steel based facing is a lower facing, and the first liquid reaction mixture is applied to an upper surface of the lower facing.

11. The method as claimed in claim 9 or claim 10, wherein the method is a continuous process.

**Patentansprüche**

1. Eine Dämmplatte, beinhaltend:

eine erste, nicht auf Stahl basierende Verkleidung (A1), bei der es sich um ein brennbares Material, ein auf Glasvlies basierendes Material oder eine dünne Metallfolie mit niedriger Schmelztemperatur und einer Dicke von 0,05 bis 0,1 mm handelt;
eine dämmende Schaumstoffschicht (D); und
eine Brandschutzbarrierenschicht (B),
der ersten, nicht auf Stahl basierenden Verkleidung benachbart und zwischen der ersten, nicht auf Stahl basierenden Verkleidung und der dämmenden Schaumstoffschicht, wobei die Brandschutzbarrierenschicht eine Dispersion aus expandierbarem Graphit in einer Polyisocyanat-Polymermatrix umfasst, wobei die Menge an expandierbarem Graphit pro Flächeneinheit von 200 $g/m^2$ bis 1250 $g/m^2$ beträgt.

2. Platte gemäß Anspruch 1, wobei die Dämmplatte eine Euroclass-Bs1d0-Einstufung aufweist.

3. Platte gemäß Anspruch 1 oder Anspruch 2, wobei die erste, nicht auf Stahl basierende Verkleidung eine Aluminiumfolie, eine mehrschichtige, nicht auf Stahl basierende Verbundwerkstofffolie, nicht aus Stahl bestehende Metallfolien-Spannschichten, ein Glasvlies, eine Polymermembran oder ein auf Holz basierendes Material ist.

4. Platte gemäß Anspruch 1 oder Anspruch 2, wobei die erste, nicht auf Stahl basierende Verkleidung eine Aluminiumfolie ist und die Brandschutzbarrierenschicht direkt auf die Aluminiumfolie geklebt ist.

5. Platte gemäß einem der Ansprüche 1 bis 4, wobei die Polyisocyanat-Polymermatrix durch Reaktion bei einem Isocyanatindex von mehr als 180 eines isocyanathaltigen Reaktanten und eines Polyolreaktanten, umfassend ein langkettiges Polyol eines Äquivalentgewichts von mehr als 200, gebildet wird.

6. Platte gemäß einem der Ansprüche 1 bis 5, wobei die Brandschutzbarrierenschicht ein Flammschutzmittel umfasst.

7. Platte gemäß Anspruch 6, wobei eine Menge des Flammschutzmittels, bezogen auf ein Gesamtgewicht der polyisocyanatbasierten Polymermatrix, von 1 Gew.-% bis 50 Gew.-% beträgt.

8. Platte gemäß einem der Ansprüche 1 bis 7, ferner beinhaltend eine zweite Verkleidung (A2), bezüglich der ersten, nicht auf Stahl basierenden Verkleidung auf einer gegenüberliegenden Seite der Schaumstoffschicht, wobei die zweite Verkleidung eine auf Stahl basierende Verkleidung oder eine auf Aluminium basierende Verkleidung ist.

9. Ein Verfahren zum Bilden einer Dämmplatte gemäß einem der Ansprüche 1 bis 8, beinhaltend die Stufen des:

Bereitstellens einer ersten, nicht auf Stahl basierenden Verkleidung, einer Brandschutzbarrierenschicht in der Form einer ersten flüssigen Reaktionsmischung, umfassend eine Dispersion aus expandierbarem Graphit in einer isocyanatbasierten Reaktionsmischung; und

Auftragens einer dämmenden Schaumstoffschicht in der Form einer zweiten flüssigen Reaktionsmischung auf die Brandschutzbarrierenschicht.

10. Verfahren gemäß Anspruch 9, wobei die erste, nicht auf Stahl basierende Verkleidung eine untere Verkleidung ist und die erste flüssige Reaktionsmischung auf eine obere Oberfläche der unteren Verkleidung aufgetragen wird.

11. Verfahren gemäß Anspruch 9 oder Anspruch 10, wobei das Verfahren ein kontinuierlicher Prozess ist.

## Revendications

1. Un panneau d'isolation, comprenant :

   un premier parement n'étant pas à base d'acier (A1) qui est un matériau combustible, un matériau à base de voile de verre, ou une feuille métallique mince à basse température de fusion d'une épaisseur de 0,05 à 0,1 mm ;
   une couche de mousse isolante (D) ; et
   une couche barrière coupe-feu (B) adjacente au premier parement n'étant pas à base d'acier et entre le premier parement n'étant pas à base d'acier et la couche de mousse isolante, la couche barrière coupe-feu incluant une dispersion de graphite expansible dans une matrice polymère polyisocyanate, la quantité de graphite expansible par unité de surface allant de 200 $g/m^2$ à 1 250 $g/m^2$.

2. Le panneau tel que revendiqué dans la revendication 1, le panneau d'isolation ayant un classement Euroclasses Bs1d0.

3. Le panneau tel que revendiqué dans la revendication 1 ou la revendication 2, dans lequel le premier parement n'étant pas à base d'acier est une feuille d'aluminium, une feuille multicouche composite n'étant pas à base d'acier, des revêtements travaillant de feuilles métalliques n'étant pas à base d'acier, un voile de verre, une membrane polymère, ou un matériau à base de bois.

4. Le panneau tel que revendiqué dans la revendication 1 ou la revendication 2, dans lequel le premier parement n'étant pas à base d'acier est une feuille d'aluminium et la couche barrière coupe-feu est directement collée à la feuille d'aluminium.

5. Le panneau tel que revendiqué dans n'importe laquelle des revendications 1 à 4, dans lequel la matrice polymère polyisocyanate est formée par la réaction à un indice d'isocyanate de plus de 180 d'un réactif contenant un isocyanate et d'un réactif polyol incluant un polyol à chaîne longue de poids équivalent supérieur à 200.

6. Le panneau tel que revendiqué dans n'importe laquelle des revendications 1 à 5, dans lequel la couche barrière coupe-feu inclut un retardateur de flamme.

7. Le panneau tel que revendiqué dans la revendication 6, dans lequel une quantité du retardateur de flamme va de 1 % en poids à 50 % en poids, rapporté au poids total de la matrice polymère à base de polyisocyanate.

8. Le panneau tel que revendiqué dans n'importe laquelle des revendications 1 à 7, comprenant en outre un deuxième parement (A2) sur un côté opposé de la couche de mousse par rapport au premier parement n'étant pas à base d'acier, le deuxième parement étant un parement à base d'acier ou un parement à base d'aluminium.

9. Un procédé de formation d'un panneau d'isolation tel que revendiqué dans n'importe laquelle des revendications 1 à 8, comprenant les étapes consistant à :

   fournir sur un premier parement n'étant pas à base d'acier, une couche barrière coupe-feu sous la forme d'un premier mélange réactionnel liquide incluant une dispersion de graphite expansible dans un mélange réactionnel à base d'isocyanate ; et
   appliquer, sur la couche barrière coupe-feu, une couche de mousse isolante sous la forme d'un deuxième mélange réactionnel liquide.

**10.** Le procédé tel que revendiqué dans la revendication 9, dans lequel le premier parement n'étant pas à base d'acier est un parement inférieur, et le premier mélange réactionnel liquide est appliqué sur une surface supérieure du parement inférieur.

**11.** Le procédé tel que revendiqué dans la revendication 9 ou la revendication 10, le procédé étant un procédé continu.

FIG. 1

# FIG. 2

**REFERENCES CITED IN THE DESCRIPTION**

**Patent documents cited in the description**

- EP 2581216 A1
- WO 2013098859 A
- IT 2011000418 W
- WO 2013053566 A
- EP 2012068069 W
- WO 2006010697 A, Huntsman
- WO 2010065724 A